# EUROPEAN PATENT SPECIFICATION

(11) **EP 3 577 887 B1**
(45) Date of publication and mention of the grant of the patent: **07.04.2021**
(21) Application number: 17715789.8
(22) Date of filing: 31.01.2017
(51) Int. Cl.: H04M 11/06, H04B 3/32, H04L 5/00

(54) **METHOD AND SYSTEM WITH IMPROVED PERFORMANCE FOR ACCESS MULTIPLEXING ON NETWORKS WITH METALLIC PAIRS**
VERFAHREN UND SYSTEM MIT VERBESSERTER LEISTUNG FÜR DAS ZUGANGSMULTIPLEXING IN NETZWERKEN MIT METALLISCHEN PAAREN
PROCÉDÉ ET SYSTÈME PRÉSENTANT DES PERFORMANCES AMÉLIORÉES POUR LE MULTIPLEXAGE D'ACCÈS SUR DES RÉSEAUX COMPRENANT DES PAIRES MÉTALLIQUES

(43) Date of publication of application: 11.12.2019
(73) Proprietor: Krupter SRL, 00198 Roma (RM) (IT)
(72) Inventor: VATALARO, Francesco, 00199 Roma (IT); MAZZENGA, Franco, 00145 Roma (IT); GIULIANO, Romeo, 00128 Roma (IT)
(74) Representative: Mari, Marco Giovanni
(86) International application number: PCT/IT2017/000017
(87) International publication number: WO 2018/142431

(56) References cited:
- WO-A1-2011/070564
- Francesco Vatalaro ET AL: "The Sub-band Vectoring Technique for Multi-Operator Environments", , 24 March 2016 (2016-03-24), XP055275092, DOI: 10.1109/ACCESS.2016.2580198 Retrieved from the Internet: URL:https://arxiv.org/ftp/arxiv/papers/160 3/1603.07693.pdf
- VATALARO ET AL: "Sub-band vectoring: a proposal to speed-up fast ultra-broadband coverage in europe while promoting fair infrastructure competition", 2016 INTERNATIONAL WORKSHOP ON FIBER OPTICS IN ACCESS NETWORK (FOAN), IEEE, 18 October 2016 (2016-10-18), pages 1-6, XP033016447, DOI: 10.1109/FOAN.2016.7764537 [retrieved on 2016-12-01]
- Anonymous: "VDSL2 Vectoring in a Multi-operator Environment - Separating Fact from Fiction | TechZine | Alcatel-Lucent", , 21 March 2012 (2012-03-21), XP055275038, Retrieved from the Internet: URL:https://techzine.alcatel-lucent.com/vd sl2-vectoring-multi-operator-environment-s eparating-fact-fiction [retrieved on 2016-05-24]

## Description

### TECHNICAL FIELD OF THE INVENTION

The present invention relates to the technical field of ultra-broadband, or UBB, transmissions (over 30 Mbit/s), with particular reference to fast access to the Internet and to other high quality services and premium contents (for example, 4K video). More in detail, the invention relates to a method and to a related system of electronic equipment that cooperate with one another to implement this method, designed to allow multiple access to metallic pair access networks (MPANs), more simply called copper networks hereinafter in the description. The method of the invention acts through suitable partitioning of a transmission frequency band of a cable into blocks, each containing a number of sub-carriers, to allocate to separate telecommunications operators. The system of the invention can be integrated in a single DSLAM (Digital Subscriber Line Access Multiplexer) apparatus and, if necessary, allow sharing of the sub-carriers present in the blocks allocated to the separate operators, so as to significantly improve transmission performances. These shared frequency blocks and sub-carriers, as further defined and characterized hereinafter in the description, are individually subject to interference suppression techniques, among which a technique called vectoring is today well established and widely accepted.

To combat the effects of FEXT (far-end cross talk) and greatly improve performances in terms of data-rate, it is possible to use interference suppression techniques defined in vectoring, a system proposed by Ginis and Cioffi and subsequently standardized as ITU T G.993.5. Ideally, vectoring suppresses FEXT through the pre-compensation of disturbances in the downstream (DS) connection toward the customer and their cancellation in the opposite upstream (US) direction.

The present invention provides a solution to the problem of the potential benefit, which is limited or even non-existent, attainable with current VDSL (Very high-speed Digital Subscriber Line) systems with increased bandwidth (today up to 35.32 MHz) and offers an alternative to other proposals put forward by companies in the sector, such as Multi-Operator Vectoring (MOV), with centralized approach. The present invention intends to improve the method and the system described in the patent publication IT UB20154279 by the same inventors, which describes a technique called Sub-Band Vectoring (SBV). Moreover, a recent publication by the same authors which can be obtained at the Internet address http://ieeexplore.ieee.org/document/7490382/, describes the reason for which bandwidth increase could be ineffective in a copper network and the advantage of the use of the band ordered in blocks (sub-bands), as proposed in the SBV technique.

Documents "The Sub-band Vectoring Technique for Multi-Operator Environments", Francesco Vatalaro ET AL and "Sub-band vectoring: a proposal to speed-up fast ultra-broadband coverage in europe while promoting fair infrastructure competition", VATALARO ET AL, 2016 INTERNATIONAL WORKSHOP ON FIBER OPTICS IN ACCESS NETWORK (FOAN), IEEE disclose methods for performing interference suppression techniques, including Vectoring techniques, on access networks with metallic pairs of varying complexity. They disclose methods including steps for the subdivision of ultra-wideband transmission frequencies into non-overlapping frequency blocks containing sub-carriers, steps for the assignment of such non-overlapping frequency blocks to separate operators, steps for the application of Vectoring type interference suppression techniques to such non-overlapping frequency blocks.

Document WO2011/070564A1 discloses an electronic apparatus, including multiple Vectoring processors, capable of determining the suppression of interference from signals received or transmitted, over access networks with metallic pairs, by multiple XDSL modems corresponding to them. According to XDSL protocols, the modems associated with these Vectoring processors can operate on subdivisions of an entire transmission frequency into channels of lower amplitude, called "bins".

The present invention, which extends and builds on the SBV technique as a special case, can be explained as follows, in an example of practical embodiment. To ensure compatibility with the VDSL2 (Very high-speed Digital Subscriber Line type 2, profile 17a), by means of the SBV technique, the frequency band above the standardized bandwidth 0-17.664 MHz is frequency division multiplexed, complying with a suitable fairness criterion, introduced in the aforesaid patent application IT UB20154279 and a brief summary of which is provided below. The highest frequency bands are first divided into separate frequency blocks to allocate to each operator. In each block allocated, the single operator is free to adopt the interference suppression technology chosen without being subject to Alien-FEXT of others. Moreover, vectoring techniques can be used to cancel Self-FEXT in each of the blocks allocated. The present invention extends the capacities and the flexibility of the SBV technique to improve, beyond the previous limits, range and performances, allowing sharing of sub-carriers in blocks of different operators.

### SUMMARY OF THE INVENTION

The object of the present invention is to propose a method and a system of reference that allow access multiplexing on networks with metallic pairs, overcoming the limits of the prior art, improving the SBV technique described in the earlier patent application IT UB20154279.

The object of the invention is achieved with a method for improved performance for access multiplexing on networks with metallic pairs according to the independent claim 1.

The invention also relates to a system for improved performance for access multiplexing on networks with metallic pairs according to claim 7.

Further features of the method and of the system for improved performance for access multiplexing on networks with metallic pairs according to the invention are described in the respective dependent claims.

The present invention allows multiplexing on MPANs of different operators through suitable distribution of an allocated transmission bandwidth, *B_{T},* in blocks, *Bᵢ, i*= 1, 2, ..., *N*, where ∑*ᵢ*(*Bᵢ*/*B_{T}*)= 1, possibly but not necessarily of the same dimensions, namely *Bᵢ*= *B_{T}*/*N.* To allow UBB transmissions to be implemented, the blocks are first allocated to separate operators and then vectoring is applied individually to each one to cancel disturbances, according to one or, in conjunction, more than one of the techniques indicated hereinafter in the description.

A fundamental property of the present invention is that the dimensions and the structure of the blocks must ensure compliance with a dual fairness criterion. Firstly, the chosen criterion is such that the customers of different operators, placed at the same distance from the roadside cabinet (CAB) that houses the DSLAM, or equivalently from a distribution point DP, and on the same access network cable, obtain the same data-rate, within the necessary margin (for example 2%), irrespective of the co-located operator that serves them (i.e. irrespective of the set of frequency blocks that serves them). The criterion uniformly ensures fairness in the data-rate value up to the maximum service distance along the cable. This property is an essential element that distinguishes the method according to the invention from a generic frequency division operation, as it aims to create equality of conditions for competing operators, placing them on the same level in the supply of access services to their customers.

Secondly, to facilitate the task of allocating frequencies by the national regulator and to avoid possible disputes between operators, the total bandwidth for each of the *M* operators, i.e. *Bₒₚ* = *B_{T}*/*M,* for all practical effects, must also have the same dimension. Therefore, the term dual fairness criterion is intended as any admissible method of planning channelling that in practice ensures both the following properties:
- uniform equality of the data-rate for customers positioned at the same distance from the DSLAM, irrespective of the operator that serves them;
- equality of the bandwidth quota between operators who share the cable.

The basic structure of the frequency blocks capable of ensuring fairness in the sense indicated above and the possibility of sharing sub-carriers are the essential fabric that supports the present invention and helps to highlight all the virtues of decentralized and flexible management of the spectral resource of the cable, as will be better described below. In fact, although offering the advantages of vectoring (or of any other technique adopted for interference suppression), the invention allows several operators to share a cable of metallic pairs, without transferring the management of their respective US and DS signals to third parties, without coordination or with limited coordination with one another. In particular, the rigidity and complexity of a centralized MOV are avoided and both the alternative operators and the dominant operator maintain a free hand in following their own UBB migration strategies without being influenced by the choices of others.

The present invention produces the following important advantages:
- *Backward compatibility*, as it can be implemented without affecting pre-existing regulations for the lower frequency bands.
- *Independent migration*, as decentralized management by operators of the spectral resources allows independent management and use, facilitates migration of each operator (for example, from the "old" CAB to a "new" CAB or to one or more DPs) without coordination or with limited coordination with competitors. This lack of ties encourages independent UBB migration policies toward full optical access of the various operators, at the same time preventing the occurrence of Alien-FEXT.
- *Dynamic frequency band reallocation*, as it allows uniform reallocation or sharing of sub-carriers and even of blocks during normal operation, or when the number of operators in an area served by a CAB changes.
- *Vectoring on expanded bandwidth*, as it allows the maximum data-rate (MOV-like) to be obtained with operation almost on the whole bandwidth, while exchanging a limited amount of data between (some of the) operators. this is obtained without transferring management of the signal to the sole dominant operator without relinquishing the privacy of the user's information. The confidentiality of user data is guaranteed by the serving operator, as passage of all the customer's traffic to the dominant operator, as occurs in a centralized system, is not necessary.

A variant of the invention is obtained by using two (or more) metallic pairs together. This variant, called Bonded Vectoring, is able to transport a data-rate per user that increases proportionally to the number of metallic pairs used but requires replacement of the Customer Premises Equipment (CPE) in the premises of the customers involved. Bonded Vectoring can be useful in the UBB migration process in conditions of independence between operators, together with the use of the dynamic frequency band reallocation function.

### Brief description of the drawings

The features and advantages of the invention will be more apparent and the invention itself will be better understood with the aid of the accompanying drawings, which show preferred embodiments thereof illustrated purely by way of non-limiting example, wherein:
- Figs. 1a-1b-1c-1d-1e-1f-1g-1h show examples of use of the spectrum of a transmission cable according to the frequency multiplexing method provided for by the invention;
- Fig. 2 shows, in block diagram, the logical-functional architecture of an SBV DSLAM apparatus adapted to implement the frequency multiplexing method provided for by the invention;
- Figs. 3a-3b show, in block diagram, possible embodiments of said SBV DSLAM apparatus;
- Figs. 4a-4b show, in block diagram, the logical-functional architecture of the FEXT processing subsystems of said SBV DSLAM apparatus;
- Fig. 5 shows, in block diagram, the logical-functional architecture of the SBV control unit of said SBV DSLAM apparatus.

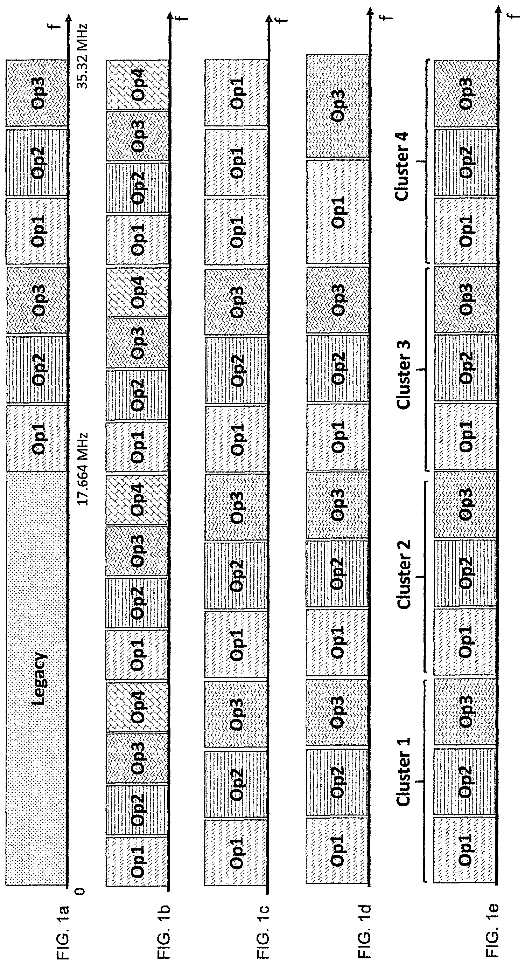

Figs. 1a-1b-1c-1d-1e-1f-1g-1h refer to the maximum frequency of 35.32 MHz purely by way of example and, consequently, this value in no way limits the applicability of the invention.

Fig. 1a shows an example of blocks positioned along the axis of the frequencies in the case of three operators. In current conditions, operators share the bandwidth 0-17.664 MHz that is employed with the profile 17a of the VDSL2 without vectoring. The number of operators that use this bandwidth in these conditions is irrelevant. In the example, the bandwidth from 17.664 MHz to 35.32 MHz has been distributed into six frequency blocks, allocating them to three operators. The number of blocks can be random, as can their dimensions. The dimension of the blocks can be measured equivalently in terms of number of sub-carriers allocated (each sub-carrier in the VDSL2 occupies in any case the bandwidth 4.3125 kHz).

Fig. 1b shows an example of allocation of frequency blocks on the whole bandwidth 0-35.32 MHz, assuming the absence of pre-existing restrictions. Also in this example it has been assumed that the frequency blocks have the same dimension, while four operators have been considered.

Another feature of the invention is the possible use of the bandwidth based on static or dynamic service models. In the first case, allocation of the blocks is fixed, while in the second case the possibility of transfer or handover of blocks between operators is considered.

Fig. 1c shows an example in which the last two frequency blocks are reallocated. In the example, these blocks are transferred to Operator 1 from Operator 2 and, respectively, from Operator 3. Fig. 1d shows a result similar to the one above obtained by re-ordering the dimensions of the frequency blocks. In the example, Operator 2 temporarily relinquishes a block in favour, respectively, of Operator 1 and of Operator 3.

To simplify implementation of the subsystems of the SBV DSLAM adapted to support the SBV technique, the frequency blocks can be grouped in ordered structures, called clusters hereinafter in the description.

Fig. 1e shows an example of arrangement of frequency blocks in clusters. Hereinafter in the description, the number of frequency blocks per cluster is referred to as cluster dimension. The benefit of arrangement of the frequency blocks in clusters will become more apparent when the operation of vectoring on expanded bandwidth is discussed.

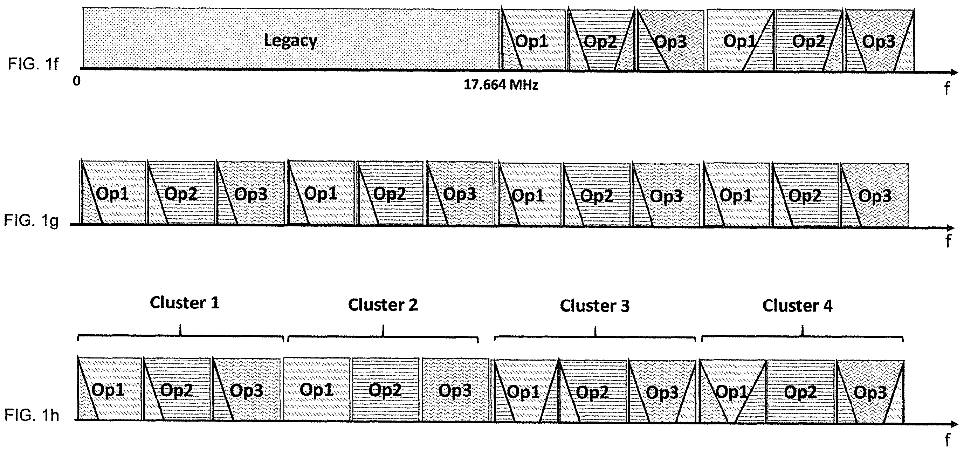

Figs. 1f-1g show two examples of sharing of sub-carriers between operators, with and without compliance with the allocation of the pre-existing band in the lower bandwidth (as shown in Fig. 1a). Fig. 1g also shows an example of a regular frequency sharing structure with sharing of sub-carriers, in which an operator uses (circularly) sub-carriers in the frequency block belonging to the operator to its right.

Fig. 1h shows an example of frequency blocks grouped in clusters and of sharing of the sub-carriers. The rules that establish sharing of the sub-carriers can differ in each cluster, as the agreements between operators can be drawn up according to needs. In the example, in cluster 2 sharing of the sub-carriers is not permitted, while in cluster 1 sharing follows the same circular rules considered in the example of Fig. 1g.

In general, the number as well as the positions of the shared sub-carriers can be predetermined, just as they can be varied dynamically in time according to the chosen operation and/or optimization strategies.

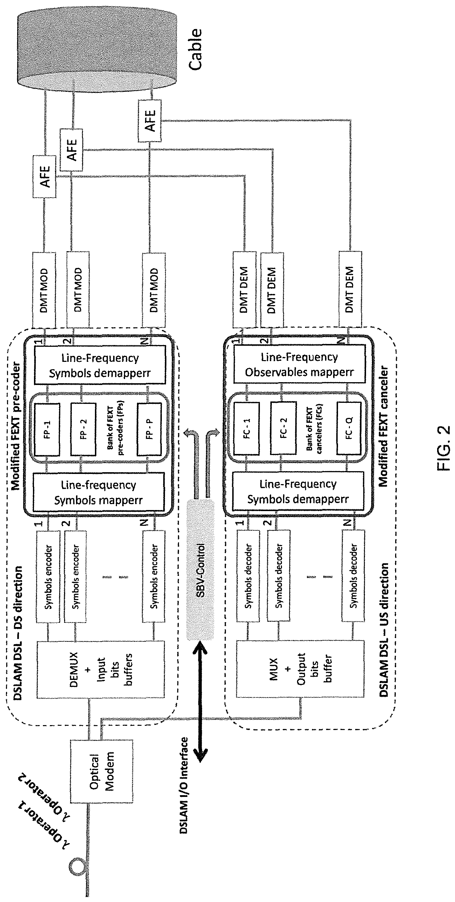

Fig. 2 shows an SBV DSLAM that implements the system proposed by the invention. The SBV DSLAM integrates a modified FEXT pre-coder, a modified FEXT canceller and an SBV control unit. These subsystems are modified, with respect to a conventional DSLAM structure provided with vectoring, to allow the SBV DSLAM to operate in accordance with the frequency multiplexing method provided for by the invention.

The SBV DSLAM can serve all the *N* lines inside the cable that connects the *N* CPEs located at the users' premises. The SBV DSLAM is designed as a single flexible system, capable of interfacing with the same type of DSLAM, in order to exchange configuration, control and management information and, if necessary, user data. For this reason, the SBV control unit is provided with a DSLAM input/output interface.

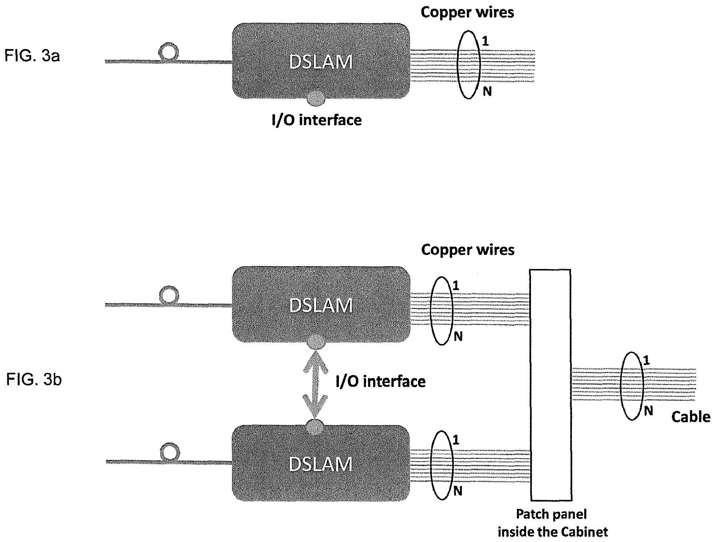

Fig. 3a shows the implementation of a single SBV DSLAM. A multiplexed optical fiber (or, equivalently, more than one fiber) connects the SBV DSLAM that, positioned inside a CAB, can serve all the lines belonging to the transmission cable coming from the same CAB to the local Central Office (CO). The specific I/O interface of the SBV DSLAM can be used separately to control it and to connect it to the management network.

Fig. 3b shows the implementation of a plurality of SBV DSLAMs. Each SBV DSLAM serves only one operator, in given conditions, can share information with other SBV DSLAMs, through the specific DSLAM I/O interface.

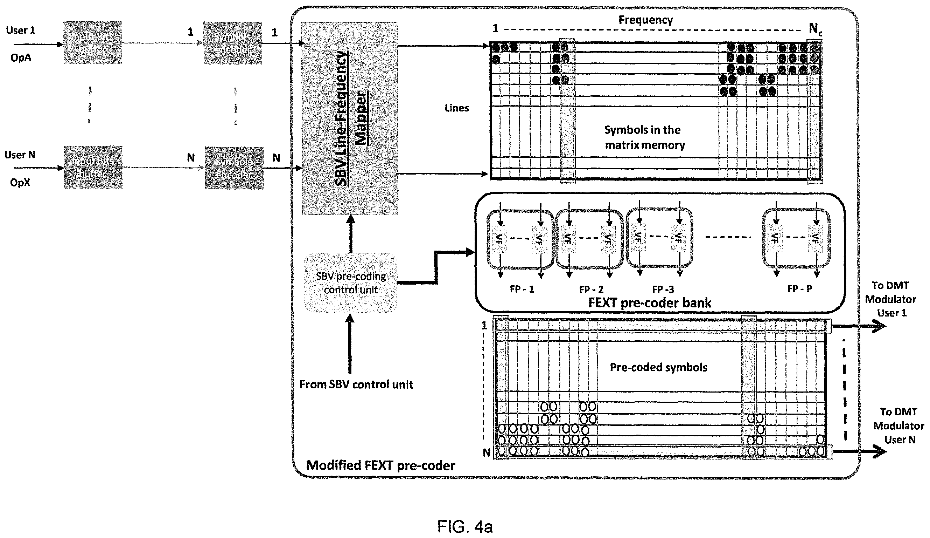

Figs. 4a-4b show the FEXT pre-coder and the FEXT canceller of the SBV DSLAM, which comprise the units required to allow the SBV DSLAM to operate in accordance with the frequency multiplexing method provided for by the invention.

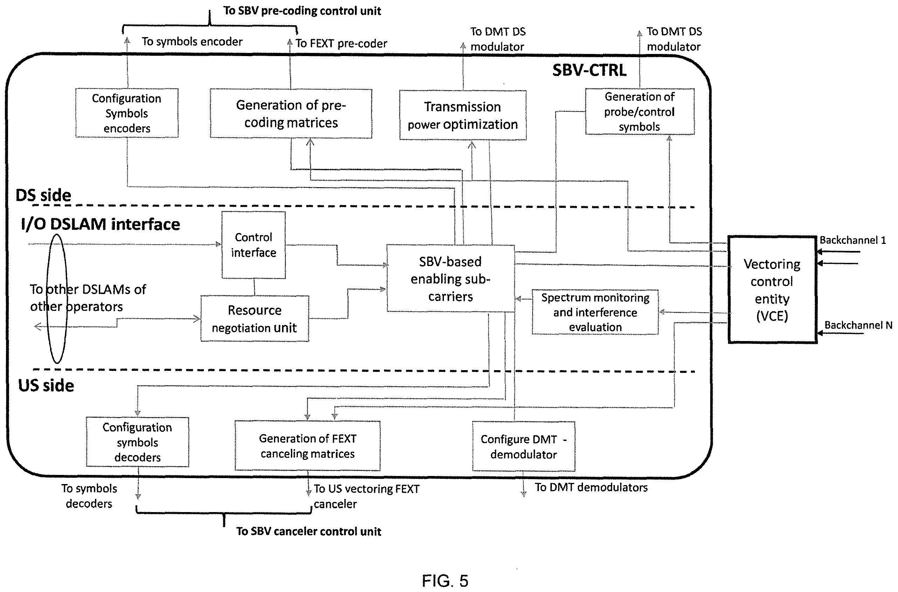

Fig. 5 shows the SBV control unit of the SBV DSLAM, which comprises the subsystems required to implement the functions required to manage and control the SBV DSLAM in accordance with the frequency multiplexing method provided for by the invention. The SBV control unit interfaces with all the subsystems of the SBV DSLAM, including the FEXT pre-coder and the FEXT canceller.

### DETAILED DESCRIPTION OF THE INVENTION

The object of the invention is achieved with a frequency division multiplexing method provided with fairness for MPANs and with a DSLAM apparatus comprising the subsystems required for implementation of this method. As shown in Figs. 1a-1b, division of the spectrum into separate frequency blocks, each individually allocated to a single operator, can evolve in time to allow operators to share sub-carriers within their frequency blocks, as shown in Figs. 1f-1g-1h, in order to significantly improve transmission performances. Shared sub-carriers can be located anywhere in the blocks allocated to the operators, and bandwidth sharing can be static or dynamic. Hereinafter in the description, the assignee of the blocks is called "reference operator", while the operator that uses sub-carriers allocated to the reference operator is called "guest operator".

With reference to Figs. 1a-1b-1c-1d-1e-1f-1g-1h, the multiplexing method on MPAN according to the invention substantially comprises the steps of:
- dividing UBB transmission frequencies into non-overlapping blocks according to two fairness criteria, to ensure fairness of bandwidth and of data-rate;
- allocating said frequency blocks to different operators;
- applying, when necessary, techniques against interference, of vectoring type, to said frequency blocks;
- sharing sub-carriers of said frequency blocks between different operators, to improve the data-rate performances.

A sub-carrier of a frequency block is called "unshared" when it is used by the users managed only by the reference operator, while it is called "shared" when the users of guest operators are also authorized to use it. As shown in Figs. 1f-1g-1h, the shared sub-carriers can be considered as an expansion of the frequency blocks initially allocated to each operator. The owner of a common sub-carrier in a frequency block is in any case the reference operator who, for example, can at any time decide to revoke sharing with the guests operators.

The SBV DSLAM according to the invention allows carriers to be shared between different operators according to strategies applicable starting from the level of alien-FEXT measured on the shared sub-carriers, taking static or dynamic action if the alien-FEXT measured exceeds a predetermined threshold level, above which the alien-FEXT must be cancelled. More in detail, if the level of alien-FEXT is declared negligible, the operators only apply vectoring for self-FEXT cancellation on the sub-carriers allocated to them and on those shared with other operators, both for upstream (US) transmissions and for downstream (DS) transmissions.

If the alien-FEXT measured on the shared sub-carriers exceeds the predetermined threshold level, the operators apply vectoring for interference cancellation (for US transmissions) or for interference pre-compensation (for DS transmissions), and more precisely:
- of self-FEXT in unshared sub-carriers;
- of self-FEXT and of alien-FEXT in shared sub-carriers.

The SBV DSLAM according to the invention and its subsystems operate in accordance with the frequency multiplexing method, according to the invention itself. The circuit diagram of an SBV DSLAM according to the invention is shown in Fig. 2. The SBV DSLAM includes subsystems necessary for:
- allowing DSL transmissions of signals of users managed by one or more operators according to the allocation plan of the sub-carriers associated with the frequency multiplexing method provided for by the invention;
- allowing sharing of the sub-carriers between operators to improve transmission performances;
- applying all the necessary interference suppression mechanisms, such as vectoring, to restore the orthogonality condition for the various user signals that use shared or unshared sub-carriers and transmitted on separate metallic pairs.

As is shown in Fig. 3b, the SBV DSLAM according to the invention is adapted to interface with other DSLAMs and/or other SBV DSLAMs, to exchange side information and data between operators, in order to ensure adequate operation of the mechanisms, such as vectoring, required to restore orthogonality of the user signals that use shared or unshared sub-carriers, transmitted on separate metallic pairs.

As is shown in Fig. 3b, several SBV DSLAMs belonging to different operators can be connected to the same transmission cable, i.e. each SBV DSLAM can be connected to each of the N copper pairs of the same cable. This arrangement is necessary to allow the single SBV DSLAM to implement the channel measurements required for calculation of FEXT pre-coding and of the FEXT cancellation matrices. As is customary, the Vectoring Control Entity (VCE) inside each DSLAM is entrusted with implementing the channel and interference measurements. In the case of the SBV DSLAM, the VCEs must estimate the channel matrices for each sub-carrier in the whole band allocated to the DSLAM and in any of the blocks allocated to the reference operator. When several operators share sub-carriers, estimations of the channel matrices and the data can be transmitted from one SBV DSLAM to the other via the dedicated DSLAM input/output interface. This arrangement allows a reduction in the calculation power required in each SBV DSLAM, delegating the task of estimating the channel to the reference operator of the frequency block to which the common sub-carrier belongs.

The single SBV DSLAM apparatus is located in a CAB or in a DP, thereby implementing a new form of frequency unbundling, which is a physical layer controller product. Even if not optimized in terms of cost, the case of two or more DSLAMs located in adjacent CABs that operate in separate sub-bands is very similar in operation. In this case, the condition of complete separation of the physical layer is implemented without active apparatuses shared between operators.

Ongoing developments by manufacturers aimed at increasing (currently doubling) the bandwidth of DSLAMs do not limit the validity of the present invention. In fact, these developments are without the fairness and flexibility measures that characterize the present invention and that allow effective use of any DSLAM with expanded bandwidth in multi-operator environments with distributed processing techniques.

### Operation of the SBV DSLAM

Operation of the SBV DSLAM according to the invention shown in Fig. 2, is as follows.

In the DS transmission direction, the signal optionally multiplexed in wavelength, with the signals of two or more operators on a single optical fiber (or, equivalently, on the same number of optical fibers as the number of operators), is first converted into an electrical signal and then demultiplexed (*"DEMUX"*)*.* The bit sequences of the various users are stored in the corresponding input bit buffers, one for each user.

The stored bit data of each user are transferred to the corresponding symbol encoder. The number of bits per symbol to be transmitted per user on each active sub-carrier is calculated in conformity with the quality information of the channel provided by the SBV control unit (*"SBV-control"*)*.*

The list of active sub-carriers to use to generate the single Digital Multi Tone (DMT) signal of a single user is set by the SBV control unit in conformity with the SBV frequency multiplexing plan.

Based on the alien-FEXT measured on the shared sub-carriers, through the frequency spectrum monitoring and interference evaluation subsystem, the SBV control unit can set the modified FEXT pre-coder to act as described below.

The information on the alien-FEXT of the sub-carriers shared between different operators can be exchanged dynamically between said operators, through the DSLAM input/output interface, in the case in which the operators use different DSLAMs (or similarly the same SBV DSLAM).

Therefore, in the case in which the alien-FEXT measured is below the predetermined threshold level, the modified FEXT pre-coder only compensates self-FEXT on all the sub-carriers allocated to the operator and, consequently, does not use the information on the alien-FEXT of the shared sub-carriers, transmitted by the other operators for cancellation of the alien-FEXT from said sub-carriers, by means of vectoring.

Instead, in the case in which the alien-FEXT measured is below the predetermined threshold level, the exchange of side information between operators is avoided, simplifying the operations implemented by the single SBV DSLAM. This strategy is useful also when the operators use physically separate SBV DSLAMs.

In the case in which the alien-FEXT measured exceeds the predetermined threshold level, the modified FEXT pre-coder also implements cancellation of the alien-FEXT on the shared sub-carriers, operating as described below.

The symbols at the output of the symbol encoder are sent to the corresponding FEXT pre-coder (FP1...FPP) included in the FEXT pre-coder bank (FPB) of the modified FEXT pre-coder subsystem of the SBV DSLAM. The distribution of symbols between FEXT pre-coders in the FPB is implemented by the line-frequency symbol mapper, according to the SBV frequency plan. Each FEXT pre-coder implements the vectoring operations in a limited group of sub-carriers. The symbols are pre-coded by each FEXT pre-coder in the bank and reassembled by the line-frequency symbol demapper, so as to generate the sequences of *N* symbols, each sent to the corresponding modulator (DMT MOD).

In US direction, the DMT signals received at the SBV DSLAM from the CPE are demodulated (DMT-DEM) and the observables obtained for each active sub-carrier are distributed between the FEXT cancellers (FC1...FCQ), included in the FEXT canceller bank (FCB) of the modified FEXT canceller subsystem of the SBV DSLAM. The distribution of the observables between FEXT cancellers in the FCB is implemented by the line-frequency observable mapper. Each FEXT canceller implements the vectoring operation for reduction of FEXT on the observables measured on a limited set of sub-carriers.

The observables without FEXT are delivered by the line-frequency symbol demapper to reconstruct the sequence of symbols of each user. These sequences are delivered to the corresponding symbol decoders to reconstruct the bit sequences received of each user. The bit sequences are stored in the corresponding output bit buffer prior to the subsequent transmission (MUX) from the SBV DSLAM to the CO.

### Detailed description of the elements of the SBV DSLAM

With reference to the details of Fig. 2, the SBV DSLAM according to the invention comprises a modified FEXT pre-coder for FEXT cancellation in the DS direction and a modified FEXT canceller for FEXT reduction in the US direction, operating by means of vectoring, implemented according to a modular, innovative, parallel and scalable architecture. Said FEXT pre-coder and said FEXT canceller are controlled by an SBV control unit.

### Modified FEXT pre-coder

The logic circuit diagram of the modified FEXT pre-coder included in the SBV DSLAM according to the invention is shown in Fig. 4a. Said modified FEXT pre-coder is adapted to implement cancellation of self-FEXT on the sub-carriers used by a single operator and also of alien-FEXT on the sub-carriers shared between several operators. To explain its operation in detail, the processing chain of a single user is described below. The information bits output by the input bit buffer are encoded in symbols by the corresponding symbol encoder.

The encoded symbols are then delivered to the SBV line-frequency mapper, which has the task of mapping the symbols in the line-frequency memory matrix. In particular, the line-frequency mapping operation consists in storing the encoded symbols in the row of the memory matrix corresponding to the user line and on columns with indices indicated in the list of active sub-carriers (shared or unshared) allocated to each user for transmission. These lists are compiled in conformity with the SBV frequency multiplexing plan. The SBV line-frequency mapper is guided by information provided for each user by the SBV pre-coder control unit, in the modified FEXT pre-coder. The symbols in the memory matrix are subjected to vectoring pre-coding by the FEXT pre-coder bank (FP1...FPP). Each of the FEXT pre-coders (FP1...FPP) operates independently on a single sub-carrier or on a subset of sub-carriers (shared or unshared). This means that each FEXT pre-coder (FP1 ...FPP) acts on symbols extracted from a subset of columns of the memory matrix. The pre-coding operation is applied by each FEXT pre-coder (FP1 ...FPP) to the symbols stored in each column of the memory matrix. In other words, vectoring is applied to the symbols that belong to the user authorized to transmit on the sub-carrier, shared or unshared, at the generic frequency *fₖ*.

The FEXT pre-coders (FP1...FPP) use side information, i.e. estimations of the channel matrices per sub-carrier provided by the VCE in the SBV DSLAM. This information is delivered to the FEXT pre-coders (FP1...FPP) in the FEXT pre-coder bank (FPB) by the SBV pre-coding control unit of the modified FEXT pre-coder.

The N symbols obtained after the pre-coding operation on each column of the memory matrix are stored in the corresponding column of a second memory matrix. This second memory matrix forms the line-frequency symbol demapper, shown in Fig. 2. At the end of the pre-coding operation, the pre-coded symbols on the same row of the second memory matrix are delivered to the corresponding DMT modulator for generation of the signal to be sent to the CPEs. The N DMT transmitters must transmit the *N* signals simultaneously.

In the case of Bonded Vectoring, the logical-functional architecture of the modified FEXT pre-coder remains unchanged, but for each user on bonded lines a plurality of DMT signals equal to the number of metallic pairs allocated to it must be generated.

### Modified FEXT canceller

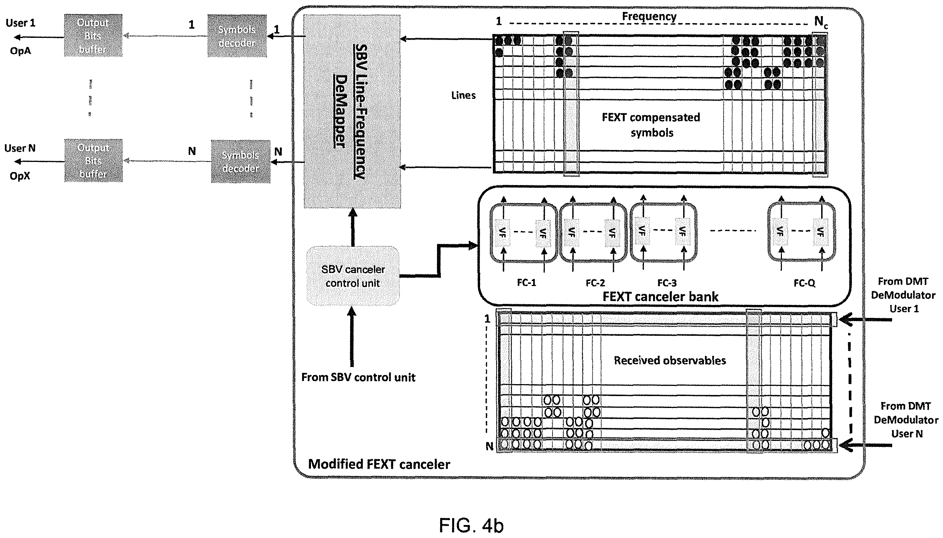

The logic circuit diagram of the modified FEXT canceller included in the SBV DSLAM according to the invention is shown in Fig. 4b.

The observables at the output of each of the N DMT demodulators are stored in the first memory matrix (Received observables). Storage is implemented by the line-frequency observable mapper shown in Fig. 2. The line-frequency observable mapper is controlled by the SBV canceller control unit. In particular, for each line that corresponds to a row of the memory matrix, the mapper stores the received observables of each user in the indexed columns from the list of the active sub-carriers (shared or unshared) allocated to each user. These lists are compiled based on the SBV frequency multiplexing plan.

Based on the alien-FEXT measured on the shared sub-carriers, through the frequency spectrum monitoring and interference evaluation subsystem, the SBV control unit can set the modified FEXT canceller to act as described below.

In the case in which the alien-FEXT on the shared sub-carriers is below the predetermined threshold level, the modified FEXT canceller applies only self-FEXT cancellation on the sub-carriers allocated to the single operator and on the shared sub-carriers, without implementing information exchange with the other operators.

In the case in which the alien-FEXT on the shared sub-carriers exceeds the predetermined threshold level, the modified FEXT canceller implements cancellation of self-FEXT and of alien-FEXT on the shared sub-carriers, operating as described below.

The symbols in the memory matrix are subjected to FEXT cancellation with vectoring managed by the FEXT canceller bank (FC-1...FCQ. In general the FEXT canceller bank operates on frequency bands that can differ from those managed by the FEXT pre-coder bank as the extensions of the overall bandwidths allocated to the DS and US transmissions are generally different. Each FEXT canceller (FC1...FCQ) operates independently on a single sub-carrier or on a subset of sub-carriers (shared or unshared). This means that the FEXT canceller acts on observables extracted from a subset of columns of the memory matrix. FEXT cancellation is applied by each FEXT canceller (FC1...FCQ) to the observables stored along each column of the memory matrix. In other words, vectoring is applied to the observables that belong to the users authorized to transmit on the generic sub-carrier (shared or unshared) at frequency, *fₖ*, in conformity with the SBV frequency plan for the US direction.

The FEXT cancellers (FC1...FCQ) use side information as estimations of the channel matrices per sub-carrier, provided by the VCE in the SBV DSLAM. This information is delivered to the FEXT cancellers (FC1 ...FCQ) in the FEXT canceller bank (FCB) by the SBV canceller control unit of the modified FEXT canceller).

The observables processed in each column of the memory matrix are stored in the same column of a second memory matrix (FEXT compensated symbols). This second memory matrix implements the function of line-frequency symbol demapper shown in Fig. 2. The symbols on each row of the second memory matrix are then delivered to the corresponding symbol decoders for reconstruction of the bit sequences transmitted by each CPE. The output bits of the decoder of a single symbol are stored in the corresponding output bit buffer before transmission by the SBV DSLAM to the CO.

In the case of Bonded Vectoring, the logical-functional architecture of the modified FEXT canceller remains unchanged, but for each user on bonded lines the symbols to transfer to the symbol decoder must be extracted from a number of rows of the second memory matrix (FEXT compensated symbols) equal to the number of metallic pairs allocated to it.

### Further details

The FEXT pre-coder and the FEXT canceller included in the SBV DSLAM according to the invention are produced with a parallel architecture defined by FEXT pre-coder banks FPB (FP1...FPP) and FEXT canceller banks FCB (FC1...FCQ). Sharing of the sub-carriers of the frequency blocks allocated to different operators is implemented by means of mappers and demappers of symbols and observables, indicated by the SBV frequency plan, associated with said FEXT pre-coder banks FPB and FEXT canceller banks FPC.

Parallelization of the vectoring operations implemented by the FEXT pre-coder banks FPB (FP1...FPP) and FEXT canceller banks FCB (FC1...FCQ) can be implemented considering different strategies for partitioning of the sub-carriers to allocate to each FEXT pre-coder and canceller belonging to said FPB and FCB banks.

These partitioning strategies can comprise:
- *Partitioning based on the frequency blocks*, in which the single FEXT pre-coder or canceller acts on the sub-carriers allocated to a single frequency block. In this case the number of FEXT pre-coders (FP1...FPP) and FEXT cancellers (FC1...FCQ) is equal to the number of frequency blocks, respectively for the DS and US transmission direction.
- *Partitioning based on the overall bandwidth allocated to each operator*, in which the single FEXT pre-coder or canceller acts on sub-carriers that belong to the combination of the frequency blocks allocated to the single operator. In this case, the number of FEXT pre-coders and of FEXT cancellers is equal to the number of operators that use the SBV DSLAM.
- *Partitioning based on frequency clusters*, in which the single FEXT pre-coder or canceller acts on the set of sub-carriers that belong to the clusters of the DS and US transmission directions. In this case the number of FEXT pre-coders (FP1...FPP) and of FEXT cancellers (FC1...FCQ) is equal to the number of clusters considered respectively for the DS and US transmission direction.
- *Partitioning based on other criteria,* in which any other division strategy can be considered, taking account of the architecture of the devices available and of other criteria decided by the manufacturer of these devices.

### SBV control unit

The SBV DSLAM according to the invention comprises an SBV control unit, shown in Fig. 5, having the task of allowing the SBV DSLAM equipment to achieve the objects and the advantages set forth above. Said SBV control unit comprises at least:
- a subsystem for enabling the sub-carriers in accordance with the SBV frequency plan (SBV-based sub-carrier enabling) both in the DS and in the US direction;
- a resource negotiation unit;
- a remote control interface;
- a frequency spectrum monitoring and interference evaluation subsystem.

The SBV control unit interfaces with the VCE that implements the channel measurements on the N lines used, to calculate the parameters required for:
- correct performance of FEXT pre-coding in the DS direction and of FEXT cancellation in the US direction;
- spectrum monitoring, interference calculation and channel quality evaluation for each sub-carrier and for each user/line.

The SBV-based sub-carrier enabling unit takes a central role, as it has the task of setting the parameters of all the CPEs interconnected to the DSLAM equipment, restricting them to operate only on active sub-carriers of interest, in conformity with the SBV frequency multiplexing plan.

In the DS direction the SBV control unit implements at least the following functions:
- it sets the indices of the shared and unshared sub-carriers on which the MOD-DMT modulator in the DSLAM equipment must transmit in the DS direction in conformity with the spectral planning for each operator;
- it specifies to the VCE the indices of the shared and unshared sub-carriers to which the symbol pre-coding operations must be applied (FEXT pre-coder bank);
- it sets the indices of the shared and unshared sub-carriers on which the VCE must calculate all the parameters required for pre-coding, optionally modified to take account of the restrictions on the number of sub-carriers to be used for transmission in DS direction in conformity with the SBV frequency multiplexing plan;
- it processes the data containing the channel estimations provided by the VCE to set calculation of the pre-coding matrices required by the modified FEXT pre-coder and to optimize the transmission power of each single carrier and apply bit loading for each user on the sub-carriers to be used for transmission in accordance with the SBV frequency multiplexing plan;
- it provides the SBV pre-coding control unit of the modified FEXT pre-coder with the information required to set the parameters of the symbol encoders as number of bits per symbol per sub-carrier and to set the indices of the sub-carriers to be used by each user for transmission in the DS direction;
- it provides the SBV pre-coding control unit of the modified FEXT pre-coder with the side information required to set the VFs for the FEXT pre-coding operation of vectoring in the DS direction;
- it controls the generation of probe signals required by the modem on the user side to allow the VCE to estimate the transmission channel (this information is then transmitted by the CPES to the DSLAM equipment to calculate the matrices required for pre-coding, as the CPEs are controlled by the VCE);
- if necessary, it uses a signalling channel from the DSLAM equipment to the CPE of the user modem to indicate the carriers on which to receive the symbols transmitted in the DS direction.
In the US direction, the SBV control unit implements at least the following functions:
- it sets the indices of the sub-carriers in which each DEM-DMT demodulator associated with the signals sent by the different users must receive;
- it specifies to the VCE the indices of the sub-carriers on which the matrices required for FEXT cancellation (FEXT canceller bank) must be calculated, if necessary modified to take account of restrictions on the number of sub-carriers to be used for US transmission in conformity with the SBV frequency multiplexing plan;
- it processes the US signals received by the single users in order to obtain the transmission channel estimations that are used to calculate the matrices required for FEXT reduction (FEXT canceller bank);
- it provides the SBV canceller control unit of the modified FEXT canceller with the information for setting the parameters of the symbol decoders as the number of bits per symbol per sub-carrier and for setting the indices of the sub-carriers to use to receive DMT signals in the US direction;
- it provides the SBV canceller control unit of the FEXT canceller with the side information required for correct setting and for implementation of the VF vectoring operations in the US direction;
- if necessary, by means of a suitable signalling channel, it indicates to the transmission subsystem of each single user CPE the sub-carriers on which the data must be transmitted in the US direction in conformity with the SBV frequency multiplexing plan for the US direction.

The SBV control unit can implement monitoring and control functions on the state of transmission, both in the US direction and in the DS direction, as well as functions of evaluating the interference from operators on adjacent channels, together with reports of any faults, through a subsystem dedicated to spectrum monitoring and interference evaluation using the information provided by the VCE external subsystem.

The control interface can manage the SBV control unit, both locally and remotely. The control interface also allows setting of the frequency multiplexing plan, i.e. of the indices of the sub-carriers for transmissions both in the US direction and in the DS direction for each line associated with a user belonging to an operator.

The control interface also allows the SBV DSLAM of an operator to connect to a DSLAM of another operator for the passage of data and side information required for interference cancellation operations (preferably but not exclusively based on vectoring techniques).

To improve the spectral efficiency, the SBV control unit can also be used to implement the dynamic partitioning techniques of the frequency spectrum and, therefore, of the frequency block allocated to the operators. The dynamic partitioning techniques can be set based on bilateral (or multilateral) agreements between operators connected to the same CAB or to the same DP.

Dynamic management of the frequency spectrum can allow operators to offer an optimal service to a different number of customers and/or applications that require different data-rate values. This determines equalization of the data traffic load between the blocks. In a condition of imbalance, temporary transfer of one or more sub-carriers, or even of whole blocks, to the operator that supports the highest traffic load determines a data-rate benefit for its customers without penalizing the customers of the operator who transfers the sub-carriers or also the blocks for a short period. In this way, both operators benefit from dynamic management of the spectrum of available frequencies and the transmission quality is generally better for all the customers they serve.

## Claims

1. A method with improved performance for access multiplexing on networks with metallic pairs comprising the steps of:
- dividing ultra-broadband transmission frequencies into non-overlapping frequency blocks containing sub-carriers;
- allocating said non-overlapping frequency blocks to separate operators;
- applying interference suppression techniques to said non-overlapping frequency blocks,
**characterized in that** it comprises the step of sharing sub-carriers contained in said non-overlapping frequency blocks between separate operators.

2. A method according to claim 1, **characterized in that** it comprises the step of grouping said non-overlapping frequency blocks in clusters.

3. A method according to claim 1, **characterized in that** the step of dividing the frequencies is implemented with a dual fairness criterion adapted to ensure fairness of bandwidth and of data-rate between separate operators.

4. A method according to claim 1, **characterized in that** the step of dividing the transmission frequencies is implemented with division criteria of static or dynamic type.

5. A method according to at least one of claims 1 to 4 **characterized in that**, for downstream transmissions, it comprises the following steps:
- setting the indices of the shared and unshared sub-carriers on which to transmit in the downstream direction;
- specifying the indices of the shared and unshared sub-carriers to which to apply the symbol pre-coding operations;
- setting the indices of the shared and unshared sub-carriers on which to calculate the symbol pre-coding parameters, optionally modified to take account of the restrictions on the number of sub-carriers to use for transmission in the downstream direction;
- processing the channel estimations required for setting calculation of the symbol pre-coding matrices, to optimize the transmission power of each single carrier, and to apply bit loading for each user on the sub-carriers to be used for transmission in the downstream direction;
- providing information required for setting the symbol coding parameters and for setting the values of the sub-carriers to be used by each user for transmission in the downstream direction;
- providing side information required for setting the FEXT pre-coding operation of vectoring in the downstream direction;
- monitoring the generation of the probing signals needed by modem devices on the user's side to allow transmission channel estimation;
- if necessary, using a signalling channel toward modem devices on the user's side to indicate the carriers on which to receive the symbols transmitted in the downstream direction.

6. A method according to at least one of claims 1 to 4, **characterised in that**, for upstream transmissions, it comprises the following steps:
- setting the indices of the sub-carriers on which to receive the signals sent by the users;
- specifying the indices of the sub-carriers on which to calculate the FEXT cancellation matrices, if necessary modified to take account of the restrictions on the number of sub-carriers to use for transmissions in the upstream direction;
- processing the signals received by the users to obtain the transmission channel estimations required for calculation of the FEXT reduction matrices;
- providing the information required for setting the symbol decoding parameters and for setting the indices of the sub-carriers to use to receive signals in the upstream direction;
- providing the side information required for setting and for implementing the FEXT cancellation operations of vectoring in the upstream direction;
- if necessary, using a signalling channel to indicate the sub-carriers on which the signals must be transmitted in the upstream direction.

7. A system for improved performance for access multiplexing on networks of metallic pairs, **characterized in that** it comprises at least one SBV DSLAM apparatus, comprising:
- a FEXT pre-coder comprising means adapted to determine FEXT cancellation for downstream transmissions;
- a FEXT canceller comprising means adapted to determine FEXT reduction for upstream transmissions;
- an SBV control unit, associated with said FEXT pre-coder and with said FEXT canceller;
- an I/O interface, comprising means adapted to allow the connection of a plurality of SBV DSLAM apparatuses to one another;
- means adapted to share sub-carriers of non-overlapping frequency blocks between separate operators, wherein said elements are adapted to determine the division of transmission frequencies into non-overlapping frequency blocks containing sub-carriers, allocated to separate operators and individually subject to vectoring-type interference suppression techniques, wherein the implementation of ultra-broadband transmissions by several operators is co-located on the same cable of metallic pairs and not coordinated or synchronized with one another.

8. A system according to claim 7, **characterized in that** said FEXT pre-coder and said FEXT canceller of said SBV DSLAM apparatus comprise respective pre-coder and canceller banks adapted to operate separately on subsets of sub-carriers in the downstream and upstream direction, according to a parallel and scalable processing architecture.

9. A system according to claim 7, **characterized in that** said SBV control unit of said SBV DSLAM apparatus comprises:
- a subsystem comprising means to enable sub-carriers in the downstream and upstream direction;
- a unit comprising resource negotiating means;
- a subsystem comprising frequency spectrum monitoring and interference evaluation means;
- an interface comprising remote control means of said control unit.

10. A system according to claim 7, **characterized in that** said SBV DSLAM apparatus comprises means adapted to divide transmission frequencies into non-overlapping frequency blocks with static or dynamic division criteria.

11. A system according to claim 7, **characterized in that** said SBV DSLAM apparatus comprises means adapted to group non-overlapping frequency blocks in clusters.

## Patentansprüche

1. Verfahren und System mit verbesserter Leistung für das Zugangsmultiplexing in Netzwerken mit metallischen Paaren, das folgende Schritte umfasst:
- Unterteilung der Ultrabreitband-Übertragungsfrequenzen in nicht überlappende Frequenzblöcke mit Unterträgern;
- Zuweisung der besagten nicht überlappenden Frequenzblöcke an separate Betreiber;
- Anwendung von Interferenzunterdrückungstechniken auf die besagten nicht überlappenden Frequenzblöcke,
**dadurch gekennzeichnet, dass** es den Schritt der gemeinsamen Nutzung von Unterträgern, die in den besagten nicht überlappenden Frequenzblöcken enthalten sind, zwischen getrennten Betreibern umfasst.

2. Verfahren und System gemäß Anspruch 1, **dadurch gekennzeichnet, dass** es den Schritt des Gruppierens der besagten nicht überlappenden Frequenzblöcke in Clustern umfasst.

3. Verfahren und System gemäß Anspruch 1, **dadurch gekennzeichnet, dass** der Schritt der Unterteilung der Frequenzen mit einem dualen Fairnesskriterium implementiert wird, geeignet, um Fairness der Bandbreite und der Datenrate zwischen separaten Betreibern sicherzustellen.

4. Verfahren und System gemäß Anspruch 1, **dadurch gekennzeichnet, dass** der Schritt der Unterteilung der Übertragungsfrequenzen mit Aufteilungskriterien statischer oder dynamischer Art implementiert wird.

5. Verfahren und System gemäß mindestens einem der Ansprüche 1 bis 4, **dadurch gekennzeichnet, dass** es für Downstream-Übertragungen die folgenden Schritte umfasst:
- Festlegung der Indizes der gemeinsam genutzten und nicht gemeinsam genutzten Unterträger, auf denen in Downstream-Richtung gesendet werden soll;
- Definition der Indizes der gemeinsam genutzten und nicht gemeinsam genutzten Unterträger, auf die die Symbolvorcodierungsoperationen angewendet werden sollen;
- Festlegung der Indizes der gemeinsam genutzten und nicht gemeinsam genutzten Unterträger, auf denen die Symbolvorkodierungsparameter zu berechnen sind, optional modifiziert, um die Beschränkungen bezüglich der Anzahl der Unterträger zu berücksichtigen, die für die Übertragung in Downstream-Richtung zu verwenden sind;
- Verarbeitung der Kanalschätzungen, die zum Einstellen der Berechnung der Symbolvorkodierungsmatrizen erforderlich sind, um die Sendeleistung jedes einzelnen Trägers zu optimieren und um das Bit-Laden für jeden Benutzer auf den Unterträgern anzuwenden, die für die Übertragung in Downstream-Richtung zu verwenden sind;
- Bereitstellung von Informationen, die zur Festlegung der Symbolcodierungsparameter und zur Festlegung der Werte der Unterträger, die von jedem Benutzer für die Übertragung in Downstream-Richtung zu verwenden sind, erforderlich sind;
- Bereitstellung von Seiteninformationen, die zur Festlegung der FEXT-Vorcodierungsoperation des Vectoring in Downstream-Richtung erforderlich sind;
- Überwachung der Erzeugung der Sondierungssignale, die von Modemgeräten auf der Benutzerseite benötigt werden, um die Schätzung des Übertragungskanals zu ermöglichen;
- gegebenenfalls Verwendung eines Signalisierungskanals in Richtung der Modemgeräte auf der Benutzerseite, um die Träger anzuzeigen, auf denen die in Downstream-Richtung übertragenen Symbole zu empfangen sind.

6. Verfahren und System gemäß mindestens einem der Ansprüche 1 bis 4, **dadurch gekennzeichnet, dass** es für Upstream-Übertragungen die folgenden Schritte umfasst:
- Festlegung der Indizes der Unterträger, auf denen die von den Nutzern gesendeten Signale empfangen werden sollen;
- Definition der Indizes der Unterträger, auf denen die FEXT-Auslöschungsmatrizen zu berechnen sind, gegebenenfalls modifiziert, um die Beschränkungen bezüglich der Anzahl der Unterträger zu berücksichtigen, die für Übertragungen in Upstream-Richtung zu verwenden sind;
- Verarbeitung der von den Benutzern empfangenen Signale, um die für die Berechnung der FEXT-Reduktionsmatrizen erforderlichen Übertragungskanalschätzungen zu erhalten;
- Bereitstellung der Informationen, die zur Festlegung der Symboldecodierungsparameter und zur Festlegung der Indizes der Unterträger, die für den Empfang von Signalen in Upstream-Richtung zu verwenden sind, erforderlich sind;
- Bereitstellung der Seiteninformationen, die zur Festlegung und zur Implementierung der FEXT-Aufhebungsoperationen des Vectoring in Upstream-Richtung erforderlich sind;
- gegebenenfalls Verwendung eines Signalisierungskanals zur Angabe der Unterträger, auf denen die Signale in Upstream-Richtung übertragen werden müssen.

7. Verfahren und System zur verbesserten Leistung für das Zugangsmultiplexing in Netzwerken mit metallischen Paaren, **dadurch gekennzeichnet, dass** es mindestens ein SBV-DSLAM-Gerät umfasst, das Folgendes umfasst:
- einen FEXT-Vorcodierer, der Mittel umfasst, die geeignet sind, um die FEXT-Löschung für Downstream-Übertragungen zu bestimmen;
- einen FEXT-Löscher, der Mittel umfasst, die geeignet sind, um eine FEXT-Reduzierung für Upstream-Übertragungen zu bestimmen
- eine SBV-Steuereinheit, die mit dem besagten FEXT-Vorcodierer und mit dem besagten FEXT-Löscher verbunden ist;
- eine E/A-Schnittstelle, die Mittel umfasst, die geeignet sind, um die Verbindung einer Vielzahl von SBV-DSLAM-Geräten miteinander zu ermöglichen;
- Mittel, die geeignet sind, um Unterträger von nicht überlappenden Frequenzblöcken zwischen separaten Betreibern zu teilen,
wobei die besagten Elemente geeignet sind, um die Aufteilung von Übertragungsfrequenzen in nicht überlappende Frequenzblöcke festzulegen, die Unterträger enthalten, die separaten Betreibern zugewiesen sind und individuell Interferenzunterdrückungstechniken vom Vektortyp unterliegen, wobei die Implementierung von Ultrabreitbandübertragungen durch mehrere Betreiber auf demselben Kabel aus metallischen Paaren gemeinsam angeordnet und nicht miteinander koordiniert oder synchronisiert ist.

8. Verfahren und System gemäß Anspruch 7, **dadurch gekennzeichnet, dass** der besagte FEXT-Vorcodierer und der besagte FEXT-Löscher des besagten SBV-DSLAM-Geräts entsprechende Vorcodierer- und Löscher-Bänke umfassen, die geeignet sind, um gemäß einer parallelen und skalierbaren Verarbeitungsarchitektur getrennt auf Teilmengen von Unterträgern in Downstream- und Upstream-Richtung zu arbeiten.

9. Verfahren und System gemäß Anspruch 7, **dadurch gekennzeichnet, dass** die besagte SBV-Steuereinheit des besagten SBV-DSLAM-Geräts Folgendes umfasst:
- ein Subsystem, das Mittel zum Freigeben von Unterträgern in Downstream- und Upstream-Richtung umfasst;
- eine Einheit, die Mittel zum Aushandeln von Ressourcen umfasst;
- ein Subsystem, das Mittel zur Überwachung des Frequenzspektrums und zur Auswertung von Interferenzen umfasst;
- eine Schnittstelle mit Mitteln zur Fernsteuerung der besagten Steuereinheit.

10. Verfahren und System gemäß Anspruch 7, **dadurch gekennzeichnet, dass** das besagte SBV-DSLAM-Gerät Mittel umfasst, die geeignet sind, um Übertragungsfrequenzen in nicht überlappende Frequenzblöcke mit statischen oder dynamischen Teilungskriterien zu unterteilen.

11. Verfahren und System gemäß Anspruch 7, **dadurch gekennzeichnet, dass** das besagte SBV-DSLAM-Gerät Mittel umfasst, die geeignet sind, um nicht überlappende Frequenzblöcke in Clustern zu gruppieren.

## Revendications

1. Procédé et système avec des performances améliorées pour le multiplexage d'accès sur des réseaux avec des paires métalliques comprenant les étapes suivantes :
- division des fréquences de transmission à ultra large bande en blocs de fréquences non chevauchantes contenant des sous-porteuses ;
- attribution desdits blocs de fréquences non chevauchantes à des opérateurs distincts ;
- application de techniques de suppression des interférences auxdits blocs de fréquences non chevauchantes,
**caractérisé par le fait qu'**il comprend l'étape consistant à partager les sous-porteuses contenues dans lesdits blocs de fréquences non chevauchantes entre des opérateurs distincts.

2. Procédé et système selon la revendication 1, **caractérisé par le fait qu'**il comprend l'étape consistant à regrouper lesdits blocs de fréquences non chevauchantes en grappes.

3. Procédé et système selon la revendication 1, **caractérisé par le fait que** l'étape de division des fréquences est mise en œuvre avec un double critère d'équité adapté pour garantir l'équité de la largeur de bande et du débit de données entre les différents opérateurs.

4. Procédé et système selon la revendication 1, **caractérisé par le fait que** l'étape de division des fréquences de transmission est mise en œuvre avec des critères de division de type statique ou dynamique.

5. Procédé et système selon au moins l'une des revendications de 1 à 4, **caractérisé par le fait que**, pour les transmissions descendantes, il comprend les étapes suivantes :
- fixation des indices des sous-porteuses partagées et non partagées sur lesquelles émettre dans le sens descendant ;
- spécification des indices des sous-porteuses partagées et non partagées auxquelles appliquer les opérations de précodage des symboles ;
- fixation des indices des sous-porteuses partagées et non partagées sur lesquelles calculer les paramètres de précodage des symboles, éventuellement modifiés pour tenir compte des restrictions sur le nombre de sous-porteuses à utiliser pour la transmission dans le sens descendant ;
- traitement des estimations de canaux nécessaires à la définition du calcul des matrices de précodage des symboles, afin d'optimiser la puissance de transmission de chaque porteuse et d'appliquer une charge binaire pour chaque utilisateur sur les sous-porteuses à utiliser pour la transmission dans le sens descendant ;
- fourniture des informations nécessaires à la définition des paramètres de codage des symboles et à la fixation des valeurs des sous-porteuses à utiliser par chaque utilisateur pour la transmission dans le sens descendant ;
- fourniture des informations annexes nécessaires pour définir l'opération de précodage FEXT de la vectorisation dans le sens descendant ;
- surveillance de la génération des signaux de sondage nécessaires aux dispositifs modems du côté de l'utilisateur pour permettre l'estimation du canal de transmission ;
- si nécessaire, utilisation d'un canal de signalisation vers les appareils modems du côté de l'utilisateur pour indiquer les porteuses sur lesquelles recevoir les symboles transmis dans le sens descendant.

6. Procédé et système selon au moins l'une des revendications de 1 à 4, **caractérisé par le fait que**, pour les transmissions montantes, il comprend les étapes suivantes :
- fixation des indices des sous-porteuses sur lesquelles recevoir les signaux envoyés par les utilisateurs ;
- spécification des indices des sous-porteuses sur lesquelles calculer les matrices d'annulation FEXT, le cas échéant modifiées pour tenir compte des restrictions sur le nombre de sous-porteuses à utiliser pour les transmissions dans le sens montant ;
- traitement des signaux reçus par les utilisateurs pour obtenir les estimations des canaux de transmission nécessaires au calcul des matrices de réduction FEXT ;
- fourniture des informations nécessaires à la définition des paramètres de décodage des symboles et à la fixation des indices des sous-porteuses à utiliser pour recevoir les signaux dans le sens montant ;
- fourniture des informations secondaires nécessaires à la définition et à la mise en œuvre des opérations d'annulation FEXT de la vectorisation dans le sens montant ;
- si nécessaire, utilisation d'un canal de signalisation pour indiquer les sous-porteuses sur lesquelles les signaux doivent être transmis dans le sens montant.

7. Procédé et système avec des performances améliorées pour le multiplexage d'accès sur des réseaux avec des paires métalliques, **caractérisé par le fait qu'**il comprend au moins un appareil DSLAM SBV, comprenant :
- un précodeur FEXT comprenant des moyens adaptés pour déterminer l'annulation FEXT pour les transmissions dans le sens descendant ;
- un annuleur FEXT comprenant des moyens adaptés pour déterminer la réduction FEXT pour les transmissions dans le sens montant ;
- une unité de contrôle SBV, associée audit précodeur FEXT et audit annuleur FEXT ;
- une interface E/S, comprenant des moyens adaptés pour permettre la connexion d'une multitude d'appareils DSLAM SBV entre eux ;
- des moyens adaptés pour partager des sous-porteuses de blocs de fréquences non chevauchantes entre des opérateurs distincts,
où lesdits éléments sont adaptés pour déterminer la division des fréquences de transmission en blocs de fréquences non chevauchantes contenant des sous-porteuses, attribués à des opérateurs distincts et soumis individuellement à des techniques de suppression des interférences de type vectorisation, où la mise en œuvre de transmissions à très large bande par plusieurs opérateurs est colocalisée sur le même câble de paires métalliques et non coordonnée ou synchronisée entre elles.

8. Procédé et système selon la revendication 7, **caractérisé par le fait que** ledit précodeur FEXT et ledit annuleur FEXT dudit appareil DSLAM SBV comprennent des banques respectives de précodeurs et d'annuleurs adaptées pour fonctionner séparément sur des sous-ensembles de sous-porteuses dans le sens descendant et montant, selon une architecture de traitement parallèle et évolutive.

9. Procédé et système selon la revendication 7, **caractérisé par le fait que** ladite unité de contrôle SBV dudit appareil DSLAM SBV comprend :
- un sous-système comprenant des moyens pour permettre des sous-porteuses dans le sens descendant et montant ;
- une unité comprenant des moyens de négociation des ressources ;
- un sous-système comprenant des moyens de surveillance du spectre des fréquences et d'évaluation des interférences ;
- une interface comprenant des moyens de contrôle à distance de ladite unité de contrôle.

10. Procédé et système selon la revendication 7, **caractérisé par le fait que** ledit appareil DSLAM SBV comprend des moyens adaptés pour diviser les fréquences de transmission en blocs de fréquences non chevauchantes avec des critères de division statiques ou dynamiques.

11. Procédé et système selon la revendication 7, **caractérisé par le fait que** ledit appareil DSLAM SBV comprend des moyens adaptés pour grouper les blocs de fréquences non chevauchantes en grappes.
